# EUROPEAN PATENT SPECIFICATION

(11) **EP 2 558 735 B1**
(45) Date of publication and mention of the grant of the patent: **28.05.2014**
(21) Application number: 10782523.4
(22) Date of filing: 12.10.2010
(51) Int. Cl.: F16B 13/14, F16B 13/12

(54) **EXPANSION FIXING**
EXPANSIONSBEFESTIGUNG
FIXATION À EXPANSION

(30) Priority: 16.04.2010 CZ 20100300
(43) Date of publication of application: 20.02.2013
(73) Proprietor: Ecoraw, S.R.O., 036 01 Martin (SK)
(72) Inventor: PALACKÝ, Alois, 756 51 Zasová (CZ)
(74) Representative: Smrckova, Marie
(86) International application number: PCT/CZ2010/000105
(87) International publication number: WO 2011/127871

(56) References cited:
- EP-A1- 2 208 896
- EP-A2- 0 338 982
- FR-A1- 2 220 667
- GB-A- 855 297

## Description

### Technical Field

The invention consists of an expansion fixing made from metal or plastic material with eyes, holes or perforations across its entire surface, filled with a filling material. The expansion fixing is longitudinal with a given length and a given cross-section, perpendicular in section to the longitudinal axis of the expansion fixing.

In particular, the present invention relates to an expansion fixing according to the preamble of claim 1. Such an expansion fixing is known from EP 0 338 982 A2.

### Background of the Invention

Up to now, the connecting or anchoring construction materials is conducted with the use of wall plugs, plastic spacers and metal elements. Wall plugs usually grip in firm substrata. Metal spacers are used for demanding connections and are usually screwed or employ other mechanical elements. Wall plugs and plastic spacers with heads grip only in firm substrata and often require further mechanical or reinforcing elements or adhesive. The existing types of wall plugs and expansion fixings can work loose from the fastened material and by means of their gradual loosening impair the evenness of walls.

For example, EP 1 373 649 B1, priority 2001 AT, describes the spacers for cladding without load-bearing capability and the method of its fixing. A drill bit with a drilling crown is used to bore a hole into which a mounting spike is inserted. An spacer is fitted onto the spike and is driven into the insulation layer with the aid of a mounting tool. An anchoring bolt is inserted through the central aperture in the spacer and a construction member is mounted onto it and is connected with the aid of a nut to the threaded tip of the anchoring bolt. The spacer includes a tube on the outer perimeter of which is arranged several, variously arranged wings, which spread radially outward. An advantage of the expansion fitting of the invention is the clean penetration of the cladding material during mounting of the cladding, whereby the spacer can grip high loads for the construction members that need fixing. A disadvantage is the evident complexity of the expansion fixing and its assembly.

EP 718 507 A3, corresponding with the utility model DE 94 22 187, priority 1995 DE, describes a fixing element for fixing insulating material panels, which contains a gripping disk on which is formed a hollow shaft and a nail with an anchoring part, the shank part of which lies in the hollow shaft and the anchoring part of which extends beyond the front end of the hollow shaft. The nail is fixed axially at least by its back end in the hollow shaft and is set in the gripping disk. The thickness of the wall of the hollow shaft is reduced toward its front end, whereby behind this narrowing segment, the hollow shaft consists of a deformable sealing segment with a reduced thickness of the wall compared to the thickness of the wall in front of the narrowing segment. According to the invention, a gripping element is thus created for attaching insulating material panels, which facilitates rapid and reliable mounting. It is mentioned in the text that the gripping element may be manufactured in such a way, that it is possible to inject around the nail through the gripping disk and shaft. It is also possible to manufacture the nail and the plastic part separately. In this case the nail is formed with a nail head and is gripped for axial fixation between the seating surface, consisting of a widening of the shaft in the area of the gripping disk, and the covering component, with attachable extension. In this case it is purposeful to manufacture the attachable covering element from impact resistant plastic.

Existing methods of anchoring predominantly construction elements make use of the following principles:
- Mechanical anchoring by means of metal and plastic wall plugs. Not suitable for soft and less cohesive materials. Requires high strength of the connected parts in order that mechanical spreading of the anchoring elements can occur in materials such as concrete, solid masonry, wood etc.
- Chemical anchors in perforated and partly hollow building structures of rigid consistency, such as hollow blocks, aerated concrete, thermal blocks etc. The principle consists of coating the anchoring element with a two-part adhesive substance, which is secured during the setting period against dripping by a plastic or metal perforated tube.
- The spacers are designed for less cohesive materials, such as soft insulating materials. The cohesion is created by a metal roll, through which the plastic foam expands and fills all space and irregularities, which are connected together by the shape of the roll. Its strength is sufficient for anchoring insulating strata and for flexible fixation of connected surfaces.

The spacer is described in patent CZ 290 305 B6, corresponding with DE 29 61 74 95 U, priority 1996 CZ. This spacer for construction purposes is composed of at least one tubular element made in the shape of a roll with eyes or perforations filled with a filling substance inside and outside the tubular element. An advantageous substance is plastic foam. Tubular elements of various diameters may be inserted one within another. The tubular element may be made from metal mesh or from perforated plastic. The tubular element can have inside it at one or both ends a gripping element. In case of necessity, a reinforcing element may be inserted in the tubular element of the expansion fixing.

An advantage of this expansion fixing is that it facilitates by a relatively simple method the anchoring, fixing and connecting of all construction materials. The spacer anchors around the entire perimeter of the hole passing through the connected materials and this anchoring is then more effective than previously known methods of anchoring with the aid of expansion fixings with heads. These spacers during use in hanging objects of medium weight with the aid of an inserted element require foam fixing of the PE wall plug to the expansion fixing in such a way as to facilitate the screwing in of screws.

All of these known methods require pre-bored holes and can for the most part be used only for a given purpose. None of the methods has completely universal use. For example, powdery and non-cohesive substrata do not allow for the creation of an adhesive layer.

### Summary of the Invention

The stated disadvantages are eliminated or fundamentally reduced in the case of the basically spiral expansion fixing according to the invention, the basis of which consists of the fact that from a predominantly flat, even metal or plastic material facilitating permanent deformation with eyes holes or perforations across its entire surface at least one helix is created. The helix has at least one terminated coil on a level basically or predominantly perpendicular to the longitudinal axis of the expansion fixing. The coils of the helix are rolled from the internal coil counter to the longitudinal axis in an inward direction in cross-section, in a direction basically perpendicular to the longitudinal axis of the expansion fixing. The start of the helix, situated within the expansion fixing, is equipped with a ridge in the direction of the longitudinal axis of the expansion fixing. The filling substance has the ability to permeate the helix.

The main advantage of this invention is the relatively undemanding and rapid method at accessible prices of anchoring, fixing and stably connecting heterogeneous construction materials such as concrete, wood, metal, brick, rendering, insulation material etc., not only of materials of the same type one to another, but also of heterogeneous materials one to another, without the necessity of using adhesives or screws. The spiral expansion fixing according to this invention comprises a new type of construction element, anchoring along the entire length of the expansion fixing and the perimeter of the hole passing through heterogeneous building materials as the case may be. In the case of fundamental heterogeneity of the joined materials, e.g. with respect to their degree of expansion, susceptibility to humidity, temperature and outdoor conditions, this expansion fixing may also act as a dilatation element, hereby the expansion fixing does not allow the impairment of the treated surface. It can be anticipated that the use of the expansion fixing in construction work, especially in insulation techniques and reconstruction of damaged buildings, e.g. after floods and other natural disasters, may become an accessible, optimal and multifunctional anchoring construction element.

The material for manufacture of the helix is easily worked and is readily accessible. Its important property is the possibility of permanent retention of a given shape. The coils of the helix establish the strength of the final expansion fixing. The number of coils increases the strength of the final expansion fixing. The reinforcing profile of the ridge increases the strength and solidity of the helix and increases the surface area of the helix in contact with the filling material. The filling substance must have the ability to penetrate between the coils of the helix, between the eyes, holes and perforations, both inside and outside, in order to ensure contact with the joined or repaired surface of the construction material and to restore the created anchoring point. In some cases of repair of buildings with contact insulation, the helix expansion fixing facilitates the implanting of this filling substance under the insulating material, where it forms an adhesive blob and renews the adhesive layer and the adhesive function and anchoring of local as well as widespread damage to the insulation. In comparison to existing anchoring technologies it is a highly effective system with high added value and a beneficial price-to-performance ratio. Overall, it is an undemanding, accessible and at the same time highly effective solution.

The metal material for the helix may be metal mesh or stainless mesh or may have an anti-corrosion treatment, or may be sheet metal with holes, perforations or notches. Metal materials are designed for demanding joining and anchoring in various types of material, where a tensile strength of more than 600 N and shear strength of more than 2000 N is required.

The plastic material for the helix may be resilient plastic with holes, eyes or notches, or net or mesh fabricated from the same. Plastic is suitable for less demanding joints, where there is no excessive shear stress on the joined surfaces. It is used for the anchoring of lightweight insulating materials.

Predominantly flat, even, metal or plastic material with eyes, holes or perforations across its entire surface advantageously creates between the helices a reinforcing part. The reinforcing part substitutes independent connecting elements between the individual helices that would otherwise be required for repair purposes and connecting of individual helices. The reinforcing part contains at one or both of its ends one or more helices at given intervals. The reinforcing part may be created during the actual manufacture of the helices as required, whereby part of the helix is left uncoiled, whether it is a one-sided uncoiling of one helix, or for joining two helices or more. More helices on the reinforcing part can be gained by using more devices for the creation of one helix.

In its perpendicular cross-section perpendicular to the longitudinal axis of the expansion fixing, the helix is predominantly circular, oval, triangular, polygonal or of other geometric shapes. The optimum shape of the helix is circular, since it is created from the construction arch profile, which is considered to be the strongest construction profile. The triangular helix profile, advantageously equilateral, is determined by three points, by which the planar surface is determined and this profile transmits equal load to all sides. It is advantageous for creating reinforcing boring both horizontal and vertical constructions.

The helix has along its entire length with respect to its longitudinal axis a predominantly identical cross-section, or has a conical cross-section. The predominantly identical cross-section is understandably employed more, since it is simple for manufacture as well as assembly and use. A conical helix is suitable for non-cohesive materials, where it prevents pulling out from the anchor point because it has a widened base.

The filling substance is plastic foam. It is advantageous to use polyurethane foam, partially expanded mineral or expanded perlite. Expanding plastic is suitable due to its rapid and effective reaction and its ability to penetrate quickly into the free spaces in the hole and coils of the helix, including holes, eyes or perforations. Very convenient is its property of increasing its volume during expansion several-fold, as much as 30 x, whereby it reliably fills surface irregularities, cavities and empty space. Polyurethane foam is readily available and favourably priced. In addition it facilitates increasing strength due to additional limitation of expansion and creates a firm adhesive join. There are not many expanded minerals, but suitable additives may be used conveniently, i.e. expanding agents that contribute to increasing the volume and reducing the weight of mineral materials. A mineral that itself expands partially is perlite.

The filling substance may be created from at least one of the materials from the group that includes plaster, cement, sand, lime, adhesive, bonding agent and suitable minerals, or suitable liquid mortar mixtures. The above-stated expanding filling materials may be supplemented also with solid particles to increase strength or as aggregates. In cases where the construction of the building allows it, it is also possible to use commonplace building materials, such as mortar or liquid, powder or paste mortar mixes.

The filling substance may create adhesive blobs within the helix at given necessary spaces between the construction elements. The adhesive blobs thus contribute to increasing the strength of anchoring of the expansion fixing in the given place.

### Description of the Drawings

The invention is described in detail in the attached schematic drawings representing
fig. 1 top view showing detail of the material in the metal mesh variation,
fig. 2 top view showing perforated material,
fig. 3 perpendicular cross-section of circular helix of the expansion fixing,
fig. 4 axonometric view of the circular helix in fig. 3,
fig. 5 perpendicular cross-section of the triangular helix of the expansion fixing,
fig. 6 axonometric view of the triangular helix in fig. 5,
fig. 7 perpendicular cross-section of oval helix,
fig. 8 perpendicular cross-section of rectangular helix,
fig. 9 perpendicular cross-section of reinforcing part with one helix,
fig. 10 axonometric view of the reinforcing part with one circular helix from fig. 9,
fig. 11 perpendicular cross-section of reinforcing part with two helices, one at each end,
fig. 12 axonometric view of the reinforcing part with two circular helices, from fig. 10,
fig. 13 perpendicular cross-section of conical helix,
fig. 14 axonometric view of the conical helix in fig. 13,
fig. 15 application of expansion fixing with reinforcing part in a damaged wall,
fig. 16 application of expansion fixing with reinforcing element,
fig. 17 application of expansion fixings for joining panel insulation construction materials,
fig. 18 application of the expansion fixing for fixing a lightning conductor and
fig. 19 application for fixing of an anchoring element.

### Examples of Embodiment of the Invention

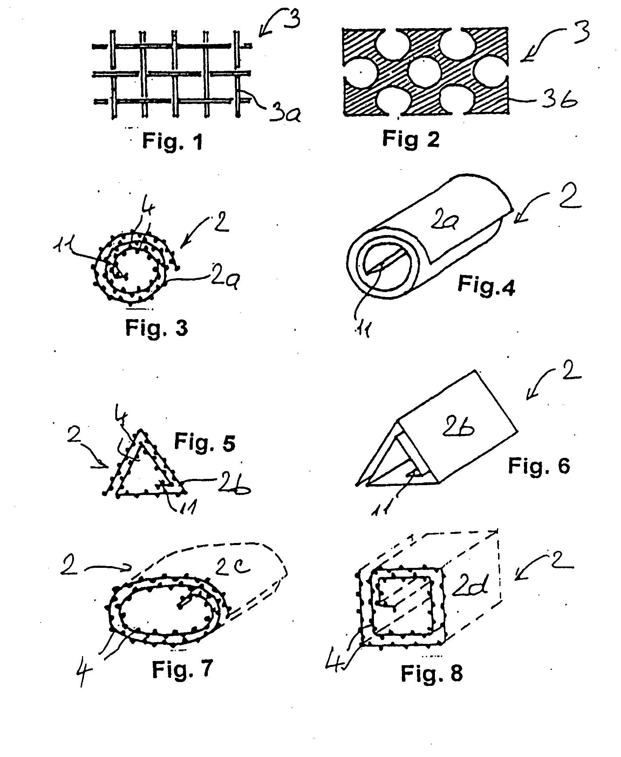

For spiral expansion fixing 1, or rather the manufacture of helix 2 of expansion fixing 1, the suitable material is predominantly flat, even material 3, shown in fig. 1, e.g. in the variation with metal net 3a, or wire mesh. The wire mesh is composed of a rectangular warp and weft. The metal net 3a may be of a stainless type or of steel with an anti-corrosion treatment. The wire used has a roughly circular cross-section, e.g. with a diameter of approx. 0.8 mm, and in the case of the use of more than one coils for the helix 2, may have a smaller diameter of 0.6 mm.

Fig. 2 shows the use of a different type of material 3, thin plate 3b either of metal sheet or of resilient plastic, with holes. The thickness of the metal sheet is approx. 0. 5 mm and of the plastic around 1 mm. The total area of the holes, perforations or notches through the material corresponds approximately to the area of open surface in the mesh.

Manufacture of helices 2 from metal materials is usually carried out cold. Manufacture of helices 2 from plastic materials is carried out hot.

Mesh 3a is coiled into a helix 2. The various forms thereof are shown in figures 3 - 8. These figures show helices 2 in cross section, predominantly perpendicular to the longitudinal axis 5 of the expansion fixing 1.

In this sense figs. 3 and 4 shows the circular helix 2a, fig. 3 shows it in cross section and fig. 4 shows the axonometric view of it.

Figs. 5 and 6 show the triangular helix 2b, it is shown in cross section in fig. 5 and in axonometric view in fig. 6.

The oval helix 2c is shown in fig. 7 in cross section perpendicular to the longitudinal axis 5 and the rectangular helix 2d is shown in fig. 8.

The helices 2 are created from predominantly flat, even material 3 such that they are coiled on a special device of appropriate cross sections into coils 4. The coils 4 of helix 2 are coiled from the inner coil 4, counter to the longitudinal axis 5 in the direction of the outer surface of helix 2, longitudinally or in parallel to the longitudinal axis 5. The coils 4 facilitate the possible uncoiling or coiling of helix 2, especially during application. Uncoiling or coiling of the coils 4 of helix 2 is applied e.g. in the case of necessity to change the diameter of the circular helix 2a or the oval helix 2c, or to increase the distance between the coils 4.

Prior to beginning the coiling of mesh 3a or thin plate 3b on the special device, on the inner edge counter to the longitudinal axis 5 the reinforcing profile of the ridge 11 is formed. Thus, the start of each helix 2 is equipped with the ridge 11, which is created by the bending, curving or bevelling of the start of the mesh 3a or plate 3b in the opposite direction to that in which the coil 4 is led further. For example, the reinforcing profile of the ridge 11 may be formed by the bending of the inner edge of the start of the mesh 3a in the opposite direction to the coil 4 of helix 2. The construction of the helix 2 is thus reinforced in the longitudinal direction of the expansion fixing 1.

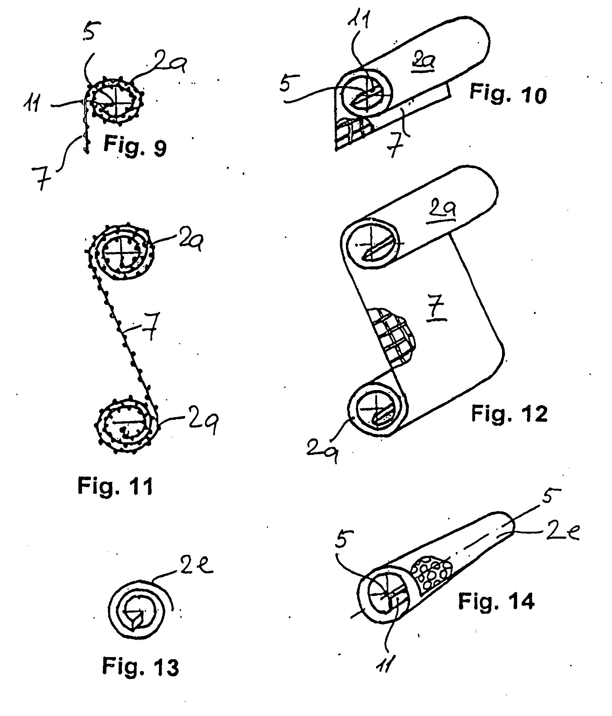

Fig. 9 shows the circular helix 2, the outer end of which crosses to the reinforcing part 7, the length of which corresponds to the requirement of the reinforcement place. The reinforcement part 7 is formed from the material 3 identical to that as for the helices 2. This circular helix 2a with a one-sided reinforcing surface is shown in axonometric view in fig. 10.

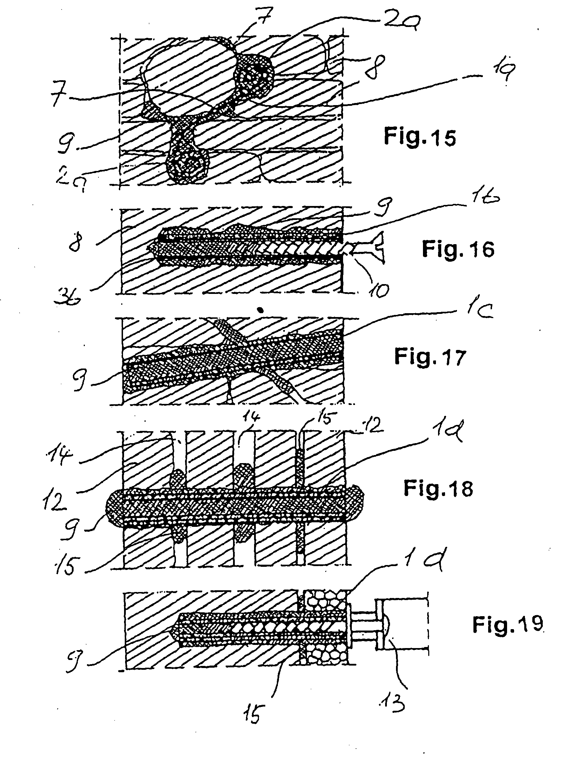

Figs. 11 and 12 show the two circular helices 2a, connected by the reinforcing part 7. Fig. 11 shows the cross section through helices 2a with the reinforcing part 7 between them and fig. 12 shows the same in axonometric view. These joined circular helices 2a are suitable e.g. for expansion fixings 1 a, for damaged building constructions, e.g. for reinforcing cracks and disintegrating parts of masonry 8, as is shown and described below in fig. 15.

All of the above-stated helices 2 are coiled from rectangular blanks of predominantly flat, even material 3 parallel to the longitudinal axis 5. Therefore, along their entire length in relation to their longitudinal axis 5 they display a predominantly identical cross section. In the side elevation of the circular helix 2a, the triangular helix 2b, the oval helix 2c and the rectangular helix 2d, these helices 2a, 2b, 2c, 2d have the shape of a rectangle.

Fig. 13 shows a cross section through the conical helix 2e. Fig. 14 shows this conical helix 2e in side axonometric view. In side elevation the conical helix 2e has the shape of a trapezoid, whereby on coiling the base of the resulting truncated cone has a greater diameter. The blank for the manufacture of the conical helix 2e is trapezoid, the dimensions of which are dependent on the number of coils 4. The conical helix 2e is suitable for expansion fixing 1 for anchoring non-cohesive and otherwise problematic substrata, e.g. for disintegrated concrete, concrete damaged by erosion, damaged panels or smaller, loosened parts of building constructions. For horizontal constructions it is additionally suitable to use adhesive mixtures, or concrete as the case may be. The conical helix 2e and the conical expansion fixing 1 resulting from it introduce a wider base into the hole in the masonry 8 or the construction for the purpose of increasing resistance to pulling out.

Fig. 15 shows the use of two circular helices 2a, each with two coils 4 and an inside edge 11 situated roughly in the longitudinal axis 5 of both helices 2a. Between the circular helices 2a is situated the reinforcing part 7 for application of the helix expansion fixing 1a. Into suitably drilled holes in the damaged masonry 8, the depth of which corresponds to the length of expansion fixing 1a, the faulty area of the crack is cleaned out to the depth of the pre-drilled holes. Subsequently, loose particles are removed. Then the prepared repair site is dampened. Both circular helices 2a are pushed into the thus prepared holes and the reinforcing part 7 is pushed into the crack, all below the surface of the face of the masonry 8. There follows filling with the filling substance 9, e.g. polyurethane foam, which is introduced first through the centre of the helices 2a and subsequently the reinforcing part 7. In the course of approx. one hour, the foam expands, filling all free space in the vicinity of the circular helices 2a and the reinforcing part 7, outside and in, including the holes, eyes, perforations or notches of the material 3, which consists e.g. of stainless mesh 3a. Following maturing of the polyurethane foam, the treated area is cleared of overflows and surface treatment of the masonry 8 is conducted. By this method expansion fixing 1a becomes a construction anchoring element with a high degree of retention and a renewal function. The anchoring is very stable, because it fills all unevenness and non-cohesive parts of the masonry 8 in the repair site.

In the upper part of fig. 16 is shown masonry 8, on which it is necessary to hang an object. In the appropriate place a hole is drilled, e.g. of 14 mm in diameter and 80 mm in depth. The hole is cleaned out and then dampened. The circular helix 2a of thin plate 3b, e.g. thin, perforated, galvanized sheet of 0.5 mm in thickness, is introduced into the hole. Helix 2a has a diameter of 18 mm and is introduced into the hole with the aid of a device and a 6 mm spike. By twisting of the helix 2a into the hole, the diameter of the helix 2a adapts to the size of the hole. Following removal of the device, the helix 2a is filled from within with the filling substance 9, which consists e.g. of expanding adhesive. After the adhesive matures, its overflows are removed and into the thus created expansion fixing 1b, or rather into the reduced central hole filled with filling substance 9, is screwed a reinforcing element 10 as a mechanical holder of appropriate diameter for hanging the object, e.g. a screw.

Fig. 17 shows masonry 8 damaged by a crack, which is repaired with the aid of triangular helix 2b, which is introduced into a pre-drilled, cleaned out and dampened hole passing through the entire damaged wall. The hole is drilled at a slant, below an angle of e.g. 15° with respect to the horizontal. The filling substance 9 consists of a mixture of cement, plaster, perlite and dispersion adhesive. Following filling of the resulting hole, the entry and exit ends of the hole are covered to prevent leaking of the mixture. The mixture is left to harden. Following hardening, the facing of the covers for blanking the ends of the holes are removed and work is continued on the surface finishing.

Fig. 18 shows a sandwich of insulation panels 12, joined by the circular helix 1a with two coils 4, manufactured from plastic mesh 3a. Retained between the individual insulation panels 12 are air spaces 14 and the whole sandwich is drilled through end-to-end with a hole of 14 mm diameter into which, following dampening, is introduced the plastic circular helix 1a. The thus prepared sandwich is filled with polyurethane foam as the filling substance 9 from both ends of the hole. Following hardening of the polyurethane foam, the expansion fixing 1d is created in the air spaces 14 between the insulation panels 12. This expansion fixing 1d is therefore formed of the circular helix 1a and polyurethane foam, which in the places of the air spaces 14 creates a polyurethane adhesive blob 15 by means of overflow. The thus created expansion fixing 1d creates a building construction element, which serves fixation, dilatation and spacing functions.

Fig. 19 shows fixing of an anchoring element 13 for a lightning rod or rainwater gutter using the circular helix 2a of metal net 3a with stainless or anti-corrosion treatment with three coils 4 of helix 2a for ensuring increased strength of fixing of the anchoring element 13 in the masonry 8. The helix 2a passes through the insulation panel 12 and the air space 14 into the masonry 8. Following screwing of the anchoring element 13 into the polyurethane foam filled expansion fixing 1d, with adhesive blobs 15, a profiled anchoring site results with the adhesive blob 15 in the air space 14.

### Industrial Applicability

The helix expansion fixing serves as a connecting anchor or reinforcing element in construction work for joining various materials, including insulating materials, for repairing damaged parts of buildings, for thermal and insulation systems, for interior modifications, for modifications of exterior facades, interior plasterwork and foundation substrata constructions and for ceiling panels in firm as well as impaired construction materials.

### Legend

1 expansion fixing
   1a expansion fixing 1a with two circular helices 2a and reinforcing part 7 between them
   1 b expansion fixing 1b with circular helix 2a
   1c expansion fixing 1c obliquely angled with triangular helix 2b
   1d expansion fixing 1d with circular helix 2a and adhesive blobs 15
2 helix
   2a circular helix
   2b triangular helix
   2c oval helix
   2d rectangular helix
   2e conical helix
3 material
   3a net
   3b panel
4 coil
5 longitudinal axis
7 reinforcing part
8 masonry
9 filling substance
10 reinforcing element
11 ridge
12 insulation panels
13 anchoring element
14 air spaces
15 adhesive blobs

## Claims

1. An expansion fixing made from metal or plastic material with eyes,
holes or perforations across its entire surface, filled with a filling material (9) and is longitudinal in the direction of its longitudinal axis (5) with a given length and a given cross-section perpendicular in section to the longitudinal axis (5) of the expansion fixing;
the metal material (3, 3a, 3b) is metal net (3a) or mesh of stainless metal or metal with an anti-corrosion treatment, or a thin plate (3b) with holes, through perforations or notches;
the plastic material (3, 3a, 3b) is a thin plate (3b) of resilient plastic with holes or eyes, or net (3a) or mesh of resilient plastic;
the said metal or plastic material (3, 3a, 3b), with eyes or holes, is coiled around a longitudinal axis (5) into basically a tubular shape with both open ends, with at least one terminal coil (4);
the end of the coil (4) or last coil (4) is situated predominantly on the outer envelope or forms partly or completely the outer envelope of the expansion fixing (1, 1 b, 1c, 1 d) of this material (3, 3a, 3b);
**characterized in that**
a) a metal or plastic material (3, 3a, 3b), facilitating permanent deformation, with eyes or holes, coiled around a longitudinal axis (5) into basically a tubular shape, which is created as a spatially arranged helix (2, 2a, 2b, 2c, 2d, 2e) with mutually separated coils (4);
b) the start of the coil (4) is situated either predominantly directly in the longitudinal axis (5) or is parallel to it, and is equipped with a ridge (11) in a direction opposite to that in which the coil (4) is led further coil (4), and
c) this spatially arranged helix (2, 2a, 2b, 2c, 2d, 2e) is filled inside and out by a filling substance (9), having the ability to permeate between the coils (4) of the helix (2, 2a, 2b, 2c, 2d, 2e) and the eyes or holes of this material (3, 3a, 3b),
d) the filling substance (9) is plastic foam, advantageously polyurethane foam, and/or one of the materials from the group including plaster, cement, sand, lime, adhesive, aggregate and suitable materials, or liquid, powder or paste mortar mixtures with suitable additives may be used conveniently, i.e. expanding agents, that contribute to increasing the volume and reducing the weight of its matters,
e) and expanding fixing (1, 1b, 1c, 1 d) is self-supported structural element.

2. The expansion fixing according to Claim 1, **characterized in that** the spatially arranged helix (2, 2a, 2b, 2c, 2d, 2e) is in perpendicular cross section, perpendicular to the longitudinal axis of the expansion fixing (1, 1b, 1c, 1d, ) predominantly circular, oval, triangular or polygonal or has other geometric shapes with respect to the longitudinal axis (5).

3. The expansion fixing according to Claim 1, **characterized in that** the spatially arranged helix (2, 2a, 2b, 2c, 2d) has along its entire length, with respect to the longitudinal axis (5), a predominantly identical cross section.

4. The expansion fixing according to Claim 1, **characterized in that** the spatially arranged helix (2e) has along its entire length, with respect to the longitudinal axis (5), a predominantly conical cross section.

5. The expansion fixing according to Claim 1, **characterized in that** the spatially arranged helix (2, 2a, 2b, 2c, 2d, 2e) at the outer end is uncoiled into the reinforcing part (7) of metal or plastic material (3, 3a, 3b).

6. The expansion fixing according to Claim 5, **characterized in that** the filling substance (9) creates adhesive blobs (15) outside the spatially arranged helix (2, 2a, 2b, 2c, 2d, 2e).

## Patentansprüche

1. Die Expansionsbefestigung ist aus den Materialien Metall oder Kunststoff gefertigt, mit Maschen, Öffnungen oder Perforierungen auf ihrer gesamten Oberfläche, ausgefüllt mit Füllmasse (9), und ist längs in Richtung ihrer Längsachse (5) mit dem gegebenen Querschnitt, senkrecht im Schnitt zur Längsachse (5) der Befestigung; Das Metallmaterial (3, 3a, 3b) ist Metallgeflecht (3a) oder Netzgewebe aus Edelstahl oder mit Antikorrosionsbehandlung, oder eine dünne Platte (3b) mit Öffnungen, Durchgangsperforierungen oder Einkerbungen;
das Kunststoffmaterial (3, 3a, 3b) ist eine dünne Platte (3b) aus zähem Kunststoff mit Öffnungen oder Maschen, gegebenenfalls Geflecht (3a) oder Netzgewebe aus zähem Kunststoff;
Das Metall- oder Kunststoffmaterial (3, 3a, 3b), mit Maschen oder Öffnungen, ist um die Längsachse (5) in eine im Wesentlichen röhrenartige Form mit beiden offenen Enden aufgewickelt, mit wenigstens einer abgeschlossenen Windung (4);
das Ende der Windung (4) oder die letzte Windung (4) ist überwiegend am äußeren Mantel situiert oder bildet teilweise oder vollständig den äußeren Mantel der Expansionsbefestigung (1, 1 b, 1 c, 1d) aus diesem Material (3, 3a, 3b);
**dadurch gekennzeichnet, dass**
a) das Metall- oder Kunststoffmaterial (3, 3a, 3b), das die dauerhafte Deformierung ermöglicht, mit Maschen oder Öffnungen, um die Längsachse (5) in eine im Wesentlichen röhrenartige Form gedreht ist, die als räumlich angeordnete Spirale (2, 2a, 2b, 2c, 2d, 2e) geschaffen ist, mit sich gegenseitig getrennten Windungen (4);
b) der Beginn der Windung (4) ist entweder überwiegend direkt in der Längsachse (5) situiert oder er ist zu ihr parallel, und ist mit einem Kamm (11) versehen, in umgekehrter Richtung, wie die Windung (4) weiterhin geführt ist; und
c) diese räumlich angeordnete Spirale (2, 2a, 2b, 2c, 2d, 2e) ist außerhalb und innerhalb mit einem Füllstoff (9) ausgefüllt, der die Fähigkeit des Durchgangs des Füllstoffs (9) zwischen seinen Windungen (4) und die Maschen und Öffnungen dieses Materials (3, 3a, 3b) aufweist;
d) der Füllstoff (9) ist aufgeschäumter Kunststoff, vorteilhaft aufgeschäumter Polyurethanschaum und/oder wenigstens ein Material aus der Gruppe, die Gips, Zement, Sand, Kalk, Kleber, Bindemittel und geeignete Mineralien einschließt, gegebenenfalls können Flüssig-, Pulver und Pastenmörtelgemische mit geeigneten Additiven, also mit Blähmitteln, die zur Vergrößerung des Volumens und der Verringerung des Gewichts der Mineralmaterialien beitragen, benutzt werden;
e) und die Expansionsbefestigung (1, 1b, 1 c, 1d) ist ein selbsttragendes Konstruktionselement.

2. Expansionsbefestigung gemäß Anspruch 1, **dadurch gekennzeichnet, dass** die räumlich angeordnete Spirale (2, 2a, 2b, 2c, 2d, 2e) im senkrechten Querschnitt ist, senkrecht auf die Längsachse der Expansionsbefestigung (1, 1b, 1c, 1d,) überwiegend kreisförmig, oval, dreieckförmig, mehrkantig, oder hat andere geometrische Formen, im Hinblick auf die Längsachse (5).

3. Expansionsbefestigung gemäß Anspruch 1, **dadurch gekennzeichnet, dass** die räumlich angeordnete Spirale (2, 2a, 2b, 2c, 2d) auf ihrer ganzen Länge, gegenüber der Längsachse (5), einen überwiegend übereinstimmenden Querschnitt aufweist.

4. Expansionsbefestigung gemäß Anspruch 1, **dadurch gekennzeichnet, dass** die räumlich angeordnete Spirale (2e) auf ihrer ganzen Länge, gegenüber der Längsachse (5), einen überwiegend kegelförmigen Querschnitt aufweist.

5. Expansionsbefestigung gemäß Anspruch 1, **dadurch gekennzeichnet, dass** die räumlich angeordnete Spirale (2, 2a, 2b, 2c, 2d, 2e) am äußeren Ende im Armierungsteil (7) aus Metall- oder Kunststoffmaterial (3, 3a, 3b) ausgerollt ist.

6. Expansionsbefestigung gemäß Anspruch 5, **dadurch gekennzeichnet, dass** der Füllstoff (9) eine Klebescheibe (15) außerhalb der räumlich angeordneten Spirale (2, 2a, 2b, 2c, 2d, 2e) bildet.

## Revendications

1. La fixation à expansion est fabriquée en matériau métallique ou plastique, avec oeillets, trous ou perforations dans toute sa surface, remplie d'une matière de remplissage (9), et est longitudinale dans le sens de son axe longitudinal (5) avec la longueur donnée et la coupe donnée, perpendiculaire dans la coupe à l'axe longitudinal (5) de la fixation ;
le matériau métallique (3, 3a, 3b) est un treillis métallique (3a) ou un filet inox ou avec traitement anticorrosion ou une fine plaque (3b) avec trous, perforations passantes ou entailles ;
le matériau plastique (3, 3a, 3b) est une fine plaque (3b) en plastique résilient avec trous ou oeillets, le cas échéant treillis (3a) ou filet en plastique résilient ;
le matériau métallique ou plastique (3, 3a, 3b), avec oeillets ou trous, est enroulé autour de l'axe longitudinal (5) dans une forme en substance tubulaire avec les deux extrémités ouvertes, avec au moins un filetage (4) ;
l'extrémité du filetage (4) ou le dernier filetage (4) est situé avant tout sur l'enveloppe extérieure ou crée partiellement ou complètement l'enveloppe externe de la fixation à expansion (1, 1b, 1 c, 1 d) de ce matériau (3, 3a, 3b) ;
**se caractérisant par le fait, que**
a) le matériau métallique ou plastique (3, 3a, 3b), permettant une déformation continue, avec oeillets ou trous, entouré autour de l'axe longitudinal (5) dans une forme en substance tubulaire, est créé en tant que spirale spatialement disposée (2, 2a, 2b, 2c, 2d, 2e) avec filetages séparés les uns des autres (4) ;
b) le début du filetage (4) est situé soit avant tout directement dans l'axe longitudinal (5) ou est parallèle à celui-ci et est muni d'un peigne (11) dans le sens opposé à celui où est mené le filetage (4) ; et
c) cette spirale spatialement disposée (2, 2a, 2b, 2c, 2d, 2e) est remplie à l'extérieur et l'intérieur par une matière de remplissage (9), avec une capacité de passage de la matière de remplissage (9) entre ses filets (4) et les oeillets ou trous de ce matériau (3, 3a, 3b) ;
d) la matière de remplissage (9) est un plastique moussant, avantageusement une mousse polyuréthane moussante et/ou au moins un matériau du groupe incluant le plâtre, le ciment, le sable, la chaux, la colle, un agglomérant et les minéraux appropriés, le cas échéant des mélanges de mortier liquides, poudreux et pâteux pouvant être utilisés avec des additifs appropriés, à savoir des agents expansifs, contribuant à une augmentation du volume et une diminution du poids des matières minérales ;
e) et la fixation à expansion (1, 1 b, 1 c, 1d) est un élément structurel autoportant.

2. Fixation à expansion selon la revendication 1, **se caractérisant par le fait que** la spirale spatialement diposée (2, 2a, 2b, 2c, 2d, 2e) est dans la section verticale, perpendiculaire à l'axe longitudinal de la fixation à expansion (1, 1b, 1 c, 1d, ), avant tout circulaire, ovale, triangulaire, à plusieurs côtés ou a d'autres formes géométriques, par rapport à l'axe longitudinal (5).

3. Fixation à expansion selon la revendication 1, **se caractérisant par le fait que** la spirale spatialement diposée (2, 2a, 2b, 2c, 2d) fait apparaître sur toute sa longueur vis-à-vis de l'axe longitudinal (5), avant tout une coupe identique.

4. Fixation à expansion selon la revendication 1, **se caractérisant par le fait que** la spirale spatialement diposée (2e) fait apparaître sur toute sa longueur vis-à-vis de l'axe longitudinal (5), avant tout une coupe conique.

5. Fixation à expansion selon la revendication 1, **se caractérisant par le fait que** la spirale spatialement diposée (2, 2a, 2b, 2c, 2d, 2e) est développée à son extrémité extérieure dans la partie armée (7) en matériau métallique ou plastique (3, 3a, 3b).

6. Fixation à expansion selon la revendication 5, **se caractérisant par le fait que** la matière de remplissage (9) crée des disques adhésifs (15) à l'extérieur de la spirale spatialement disposée (2, 2a, 2b, 2c, 2d, 2e).
